# EUROPEAN PATENT SPECIFICATION

(11) **EP 3 741 531 B1**
(45) Date of publication and mention of the grant of the patent: **14.02.2024**
(21) Application number: 20172030.7
(22) Date of filing: 29.04.2020
(51) Int. Cl.: B27M 1/08, B23Q 1/00, B23Q 3/00

(54) **MACHINE TOOL WITH MOVABLE TOOL HOLDER DEVICES**
WERKZEUGMASCHINE MIT BEWEGLICHEN WERKZEUGHALTER GERÄT
MACHINE-OUTIL AVEC OUTIL DISPOSITIF PORTE-OUTIL MOBILE

(30) Priority: 10.05.2019 IT 201900006720
(43) Date of publication of application: 25.11.2020
(73) Proprietor: SCM Group S.p.A., 47921 Rimini (RN) (IT)
(72) Inventor: D'AURIA, Marcello, 47921 RIMINI (RN) (IT)
(74) Representative: Tiburzi, Andrea

(56) References cited:
- EP-A1- 2 842 705
- EP-A1- 2 957 382
- DE-A1- 19 858 791
- DE-A1-102004 022 598

## Description

The present invention relates to a machine tool with movable tool holder devices, according to the preamble of claim 1. Such a machine tool is known from the document EP 2957 382 A1.

In the common jargon of the reference sector, the tool holder devices are also referred to with the term "magazines for tools" or, more simply, "tool magazines".

In the following the description will be addressed to a machine tool for the processing of wooden panels, but it is clear that the same should not be considered limited to this specific use, since it can also extend to other types of machine tools for the working of workpieces of other nature and/or form.

Machine tools are currently known, which have a single tool magazine movable with respect to the operating head intended to accommodate the tools necessary for carrying out the foreseen workings.

Machine tools equipped with two tool magazines are also known, of which at least one with a fixed position.

Such known machine tools, however, show several drawbacks and technical limitations related, mainly, to the low flexibility in relation to the operating procedures for changing the tools in the relative devices for carrying out the operations.

Furthermore, in some known machine tools, the aforementioned tool change procedures are rather complex and require long execution times.

The configurations of traditional tool magazines are normally such as not to offer a satisfactory load capacity of the tools in the cases where the latter are of a different type.

The tool magazines normally provided in traditional machine tools also have dimensions and positions such as to determine limitations in the possibility of moving the mobile components of the machine itself.

In light of the above, it is therefore an object of the present invention providing a machine tool with mobile tool holder devices, which allows to load tools of different types into these devices, while maintaining a high load capacity.

Another object of the invention is providing a machine tool with mobile tool holder devices that are such as not to hinder the movements of the moving parts of the machine itself.

A further object of the present invention is providing machine tool with mobile tool holder devices, which have a reduced overall size.

It is therefore specific object of the present invention a machine tool for machining workpieces, comprising: a base for supporting, in use, at least one workpiece to be machined; a supporting structure which is movable above said base along a first axis, and which substantially extends along a second axis; operative means which are associated with said supporting structure and movable relative to said supporting structure along said second axis and along a third axis, which is orthogonal to said first axis and said second axis, said operative means being configured to receive, in use, at least one tool for machining said at least one workpiece; a first device for carrying at least one tool, said first device being relatively movable relative to said operative means between a respective resting position, where said first device is at a predetermined distance from said operative means, and a respective operative position, where said first device is placed in such a way as to allow the exchanging of at least one tool between said first device and said operative means; and a second device for carrying at least one tool, said second device being movable relative to said supporting structure between a respective resting position, where said second device is at a predetermined distance from said operative means, and a respective operative position, where said second device is placed in such a way as to allow the exchanging of at least one tool between said second device and said operative means; wherein said first device in the respective resting position and said second device in the respective resting position are above each other.

Advantageously according to the invention, said first device in the respective operative position and said second device in the respective operative position may occupy substantially the same position on a plane, which is defined by said second axis and said third axis.

Conveniently, according to the invention, said second device may be movable from the respective resting position to the respective operative position by a first translation according to an inclined direction having a component along said second axis and a component along said third axis.

Further according to the invention, said second device may be further movable along said second axis by a subsequent second translation along said second axis.

Alternatively according to the invention, said second device may be movable from the respective resting position to the respective operative position by a first translation according to an inclined direction having a component along said second axis and a component along said third axis, and a rotation about said first axis after said first translation.

Preferably according to the invention, said second device may be further movable along said second axis by a subsequent second translation along said second axis, and in that said rotation about said first axis is performed by a tilting system.

Still according to the invention, said tilting system may comprise a cam.

Further according to the invention, said rotation and said second translation may be performed simultaneously.

Conveniently according to the invention, during said first translation a proximal portion of said second device with respect to said operative means may be at a height, as measured along said third axis, which is lower than the remaining portion of said second device.

Preferably according to the invention, said second device may be configured to carry at least one tool comprising a disc blade.

Advantageously according to the invention, said first device may be movable from the respective resting position to the respective operative position by a translation along said second axis.

Conveniently according to the invention, a laying plane may be provided on said base and in that said first device may be rotatable about said third axis which is substantially orthogonal to said laying plane.

Further according to the invention, said first device and said second device may be mounted to said supporting structure in a movable way along said axis.

The present invention will be now described, for illustrative but not limitative purposes, according to its preferred embodiments, with particular reference to the figures of the enclosed drawings, wherein:
figure 1 is a schematic axonometric view of a machine tool with two movable tool holder devices according to a first embodiment of the present invention;
figure 2 is an axonometric detail view taken from figure 1, in which the first tool holder device and the second tool holder device are both in rest position;
figure 3 is a second axonometric detail view, in which the first tool-holder device is in rest position, while the second tool holder device is in an intermediate position;
figure 4 is a third axonometric detail view, in which the first tool holder device is in rest position, while the second tool holder device is in the respective operating position;
figure 5 is a fourth axonometric detail view, in which the first tool-holder device is in the relative operating position and the second tool-holder device is in rest position;
figure 6 is an axonometric view showing the first tool holder device and the second tool holder device, both in rest position, of a machine tool according to a second embodiment of the invention;
figure 7 is an axonometric view of figure 6, in which the first tool holder device is in rest position, while the second tool holder device is in an intermediate position; and
figure 8 is an axonometric view relating to figures 6 and 7, in which the first tool-holder device is in the rest position, while the second tool-holder device is in the respective operating position.

In the various figures, similar parts will be indicated by the same reference numbers.

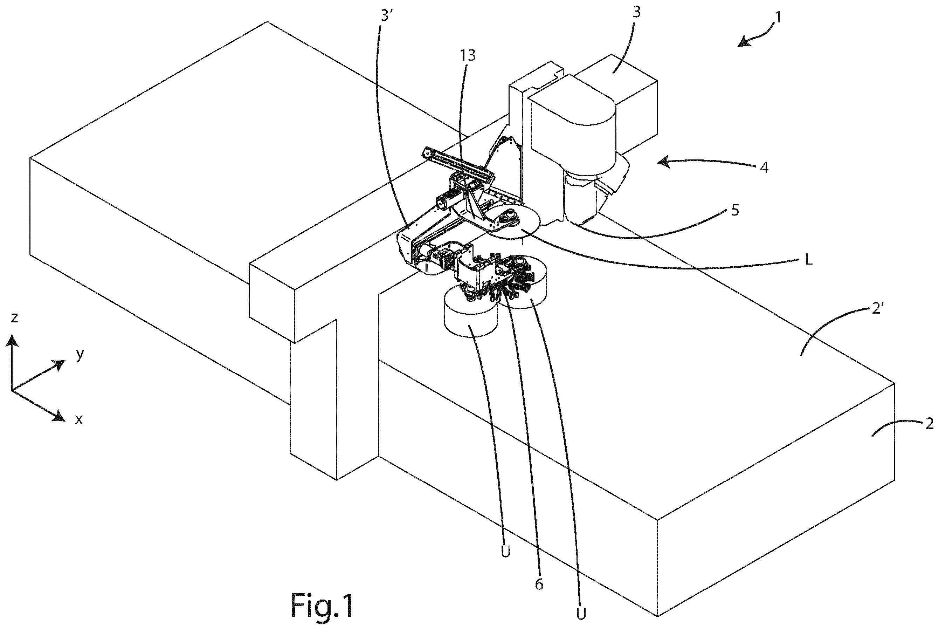

Referring to figures 1-5, the number 1 indicates a machine tool according to a first embodiment of the present invention.

The machine tool 1 comprises a base 2, on which a support surface 2' is defined to allow supporting and blocking panels made of wood or other material or other types of pieces (not shown) to be worked, and a crosspiece 3 mobile along a first X-axis, above the base 2.

An operating head 4 is mounted on the crosspiece 3 in a movable manner along a second Y-axis, orthogonal to the first X-axis.

The operating head 4 is equipped with an electrospindle 5, rotating around its axis and configured to receive a tool.

This electrospindle 5 is also movable at least along a third Z-axis orthogonal to said first X and second Y axes.

A support carriage 3' is mounted on the crosspiece 3, i.e., a frame movable with respect to the same crosspiece 3 along the second Y-axis.

A first magazine 6 is also connected to the support carriage 3', for housing tools U having a circular development and equipped, in the relative periphery, with a plurality of fork-shaped gripping elements 7 to take the tools U.

The first magazine 6 is arranged parallel to the XY plane formed by the first X-axis and the second Y-axis and is also rotatable about a third Z-axis orthogonal to said first X and second Y axis.

In particular, the first magazine 6 is connected to the support carriage 3' through a first linear guide 8, provided on the same support carriage 3', and directed along the second Y-axis, and a first lateral support 9, movable along said first guide 8, under which the same first magazine 6 is mounted, rotatable around the third Z-axis.

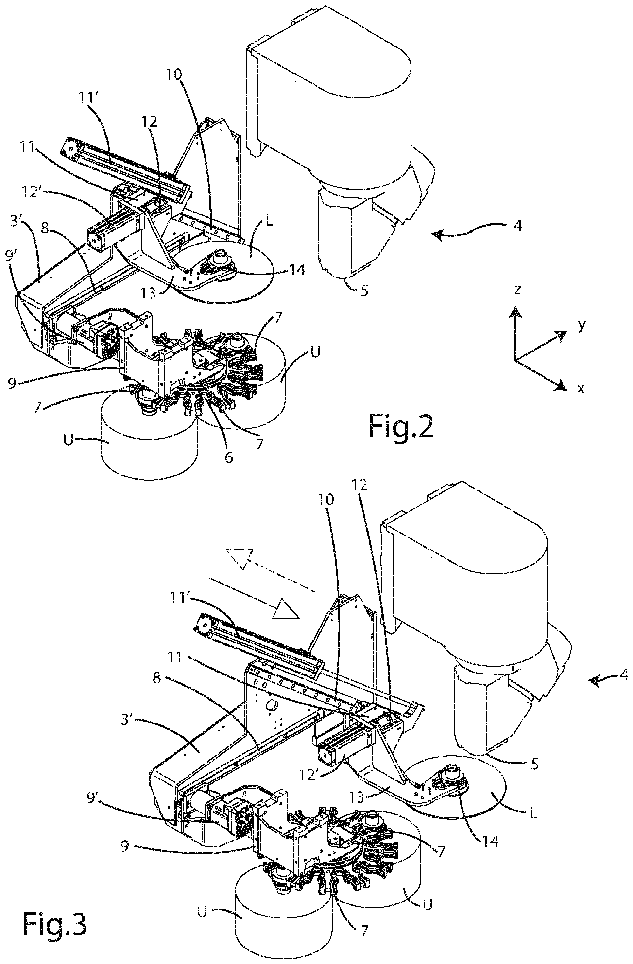

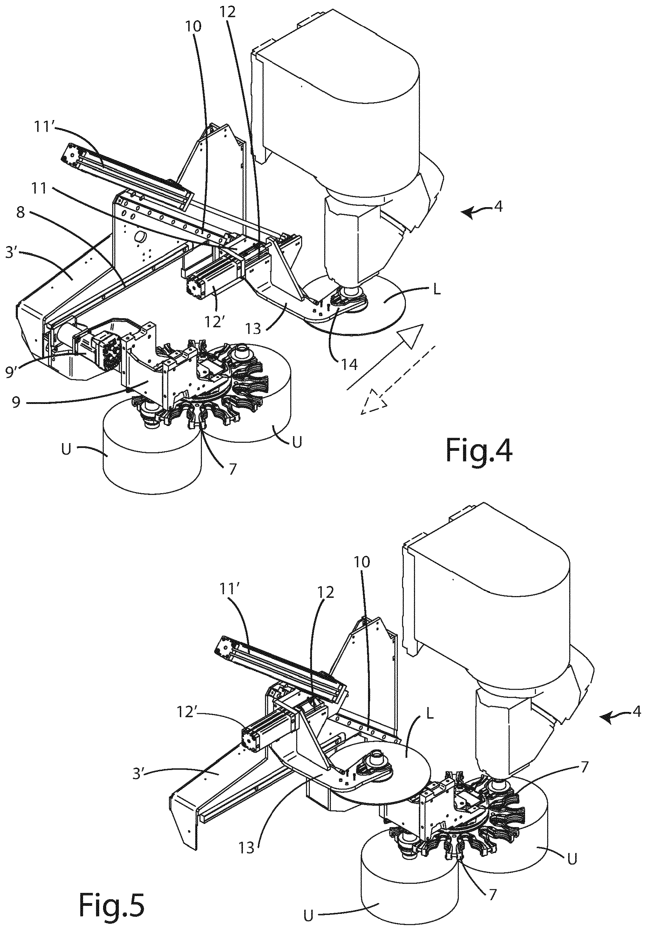

A first electric actuator 9' is also provided in the machine tool 1 for sliding the first lateral support 9 along the first guide 8, so as to be able to move the first magazine 6 between a rest position (see figs. 2-4), wherein the same first magazine 6 is at a certain distance from the electrospindle 5, and an operating position (see fig. 5), in which one of the gripping elements 7 is located just below the electrospindle 5 to allow the exchange of the tool with the latter.

According to a variant of the machine tool 1, the first actuator 9' can alternatively be of pneumatic type.

A second oblique linear guide 10 is also provided on the support carriage 3', arranged on a plane YZ formed by the second Y and the third Z axis.

A second lateral support 11 can move along the second linear guide 10 thanks to a second pneumatic actuator 11',

On the second lateral support 11 there is instead a third linear guide 12, horizontal, oriented parallel to the second Y-axis, so that the orthogonal projection of the direction of the second linear guide 10 on the YZ plane is incident to the orthogonal projection of the direction of the third linear guide 12 on the same plane YZ.

On the third linear guide 12 there is also mounted, movable along the second Y-axis, a second magazine 13 for housing a tool.

The second magazine 13 is substantially "L" shaped and it is provided, in correspondence of one of its ends, with a fork-shaped gripping element 14, for gripping a tool, preferably a blade tool L comprising a disc blade.

According to some possible variants of the invention, the second magazine can be configured in such a way as to allow the housing of two or more tools, also of a different type from that indicated above and shown in the accompanying figures.

The movements of the second magazine 13 along the third linear guide 12 are made possible thanks to a third pneumatic actuator 12'.

According to some variants of the machine tool 1, the second actuator 11' and/or the third actuator 12' can also be of the electric type.

The aforementioned second actuator 11' allows to move the second magazine 13 between a respective rest position (see fig. 2) and an intermediate position (see fig. 3).

In particular, when the second magazine 13 is in its rest position, it is located exactly above the first magazine 6 in a rest position (see fig. 2), so as not to increase the overall horizontal dimensions.

The third actuator 12' is instead designed to allow the movement of the second magazine 13 between the aforementioned intermediate position (see fig. 3) and an operating position (see fig. 4), in which the gripping element 14 of the second magazine 13 is located exactly under the electrospindle 5 to allow the exchange of the blade tool L between the latter and the second magazine 13, or vice versa.

Furthermore, when the second magazine 13 is in the respective operating position, this substantially occupies the same position occupied by the first magazine 6 in the relative operating position.

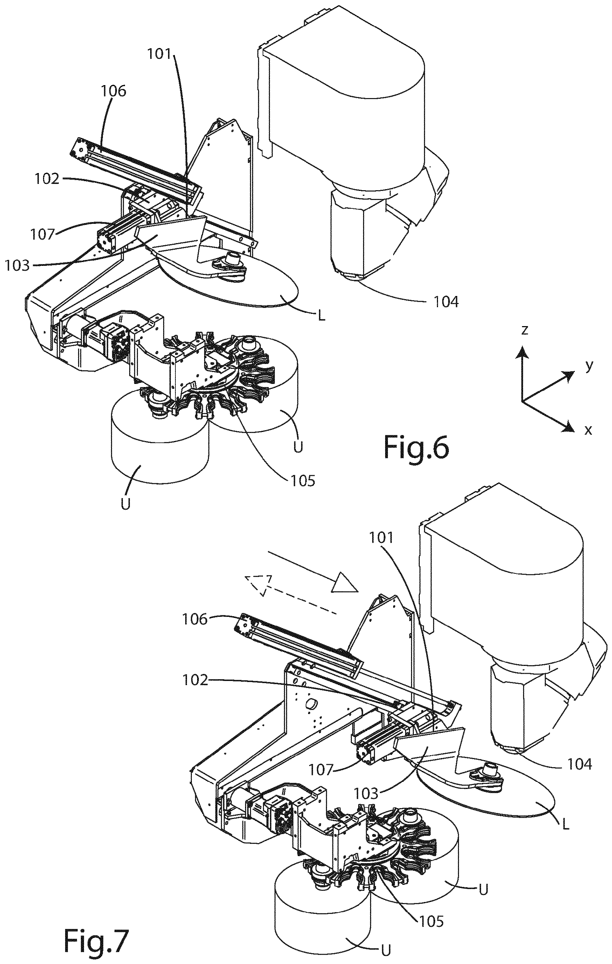

Figures 6-8 instead show a second embodiment of the invention, identical to that illustrated in figures 1-5 but also incorporating a tilting system 101, equipped with a cam, interposed between the second lateral support 102 and the second magazine 103.

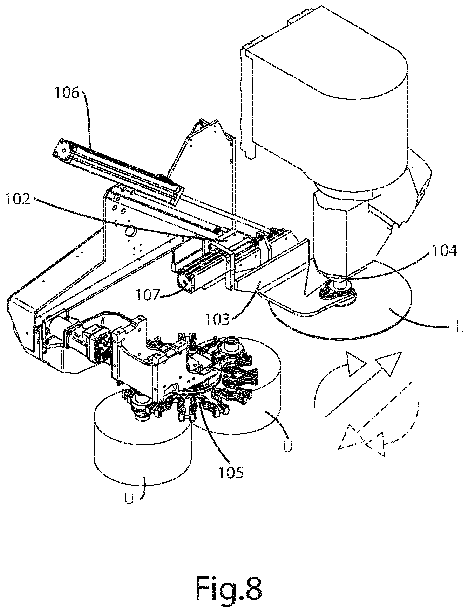

This tilting system 15 is provided to allow the rotation of the second magazine 103 around the first X-axis between an inclined position (see figs. 6, 7), in which the proximal portion of the second magazine 103 with respect to the electrospindle 104 is a lower portion with respect to the remaining part of the second magazine 103, and a horizontal position (see fig. 8), in which said second magazine 103 is arranged substantially parallel to the XY plane.

Also in this case, the first magazine 105 is capable of performing the same movements described above with reference to the first embodiment of the invention, to allow the exchange of the tools U with the electrospindle 104.

As regards instead the exchange operations of the blade tool L between the second magazine 103 and the electrospindle 104, these take place in the following ways.

When the second magazine 103 is in the respective rest position, it is placed above the first magazine 105 with the above-mentioned proximal portion tilted_downwards, and with the second actuator 106 and the third actuator 107 both in the respective retracted configuration (see fig. 6).

When the delivery of the blade tool L from the second magazine 103 to the electrospindle 104 or the picking up of such tool from the latter is necessary, said second magazine 103 first moves to an intermediate position (see fig. 7), thanks to the extension of the second actuator 106, and, subsequently, from this intermediate position to the relative operating position (see fig. 8), thanks to a rotary-translatory motion, caused by the extension of the third pneumatic actuator 107 and by the simultaneous rotation of the second magazine 103 about the first X-axis operated by the tilting system 101.

Also in this case, when the second magazine 103 is in the operative position, this occupies substantially the same position occupied by the first magazine 105 in the relative operative position.

As can be seen from the foregoing description and from the accompanying figures, the machine tool according to the invention has an extremely versatile and at the same time space-saving system for changing tools, so as not to limit in any way, when inactive, the movement possibilities of the operating head bearing the electrospindle.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine tool (1) for machining workpieces, comprising:
- a base (2) for supporting, in use, at least one workpiece to be machined;
- a supporting structure (3) which is movable above said base (2) along a first axis (X), and which substantially extends along a second axis (Y);
- operative means (4, 5; 104) which are associated with said supporting structure (3) and movable relative to said supporting structure (3) along said second axis (Y) and along a third axis (Z), which is orthogonal to said first axis (X) and said second axis (Y), said operative means (4, 5; 104) being configured to receive, in use, at least one tool (U, L) for machining said at least one workpiece;
- a first device (6, 105) for carrying at least one tool (U), said first device (6, 105) being relatively movable relative to said operative means (4, 5; 104) between a respective resting position, where said first device (6, 105) is at a predetermined distance from said operative means (4, 5; 104), and a respective operative position, where said first device (6, 105) is placed in such a way as to allow the exchanging of at least one tool (U) between said first device (6, 105) and said operative means (4, 5; 104); **characterized in that** said first device (6, 105) is movable from the respective resting position to the respective operative position by a translation along said second axis (Y); and
- a second device (13, 103) for carrying at least one tool (L), said second device (13, 103) being movable relative to said supporting structure (3) between a respective resting position, where said second device (13, 103) is at a predetermined distance from said operative means (4, 5; 104), and a respective operative position, where said second device (13, 103) is placed in such a way as to allow the exchanging of at least one tool (L) between said second device (13, 103) and said operative means (4, 5; 104);
wherein said first device (6, 105) in the respective resting position and said second device (13, 103) in the respective resting position are above each other.

2. Machine tool (1) according to claim 1, **characterized in that** said first device (6, 105) in the respective operative position and said second device (13, 103) in the respective operative position occupy substantially the same position on a plane which is defined by said second axis (Y) and said third axis (Z).

3. Machine tool (1) according to claim 1 or 2, **characterized in that** said second device (13) is movable from the respective resting position to the respective operative position by a first translation according to an inclined direction having a component along said second axis (Y) and a component along said third axis (Z) .

4. Machine tool (1) according to claim 3, **characterized in that** said second device (13) is further movable along said second axis (Y) by a subsequent second translation along said second axis (Y).

5. Machine tool according to claim 1 or 2, **characterized in that** said second device (103) is movable from the respective resting position to the respective operative position by a first translation according to an inclined direction having a component along said second axis (Y) and a component along said third axis (Z), and a rotation about said first axis (X) after said first translation.

6. Machine tool according to claim 5, **characterized in that** said second device (103) is further movable along said second axis (Y) by a subsequent second translation along said second axis (Y), and **in that** said rotation about said first axis (X) is performed by a tilting system.

7. Machine tool according to claim 6, **characterized in that** said tilting system comprises a cam.

8. Machine tool according to claim 7, **characterized in that** said rotation and said second translation are performed simultaneously.

9. Machine tool according to any one of claims from 5 to 8, **characterized in that** during said first translation a proximal portion of said second device (103) with respect to said operative means (104) is at a height, as measured along said third axis (Z), which is lower than the remaining portion of said second device (103) .

10. Machine tool (1) according to any one of the preceding claims, **characterized in that** said second device (13, 103) is configured to carry at least one tool (L) comprising a disc blade.

11. Machine tool (1) according to any one of the preceding claims, **characterized in that** a laying plane (2' ) is provided on said base (2) and **in that** said first device (6, 105) is rotatable about said third axis (Z) which is substantially orthogonal to said laying plane (2' ).

12. Machine tool (1) according to any one of the preceding claims, **characterized in that** said first device (6, 105) and said second device (13, 103) are mounted to said supporting structure (3) in a movable way along said axis (Y).

## Patentansprüche

1. Werkzeugmaschine (1) zum Bearbeiten von Werkstücken, umfassend:
- eine Basis (2) zum Tragen im Gebrauch mindestens ein zu bearbeitendes Werkstück;
- eine Trägerstruktur (3), die über der Basis (2) entlang einer ersten Achse (X) beweglich ist und die sich im Wesentlichen entlang einer zweiten Achse (Y) erstreckt;
- Betriebseinrichtungen (4, 5; 104), die mit der Trägerstruktur (3) assoziiert und in Bezug auf die Trägerstruktur (3) entlang der zweiten Achse (Y) und entlang einer dritten Achse (Z), die orthogonal zu der ersten Achse (X) und der zweiten Achse (Y) ist, beweglich sind, wobei die Betriebseinrichtungen (4, 5; 104) konfiguriert sind, um im Gebrauch mindestens ein Werkzeug (U, L) zum Bearbeiten des mindestens einen Werkstücks aufzunehmen;
- eine erste Vorrichtung (6, 105) zum Tragen mindestens eines Werkzeugs (U), wobei die erste Vorrichtung (6, 105) in Bezug auf die Betriebseinrichtungen (4, 5; 104) zwischen einer jeweiligen Ruheposition, in der die erste Vorrichtung (6, 105) in einem vorbestimmten Abstand von den Betriebseinrichtungen (4, 5; 104) ist, und einer jeweiligen Betriebsposition, in der die erste Vorrichtung (6, 105) angeordnet ist, um einen Austausch von mindestens einem Werkzeug (U) zwischen der ersten Vorrichtung (6, 105) und den Betriebseinrichtungen (4, 5; 104) zu ermöglichen; **dadurch gekennzeichnet, dass** die erste Vorrichtung (6, 105) durch eine Verschiebung entlang der zweiten Achse (Y) aus der jeweiligen Ruheposition in die jeweilige Betriebsposition bewegbar ist; und
- eine zweite Vorrichtung (13, 103) zum Tragen mindestens eines Werkzeugs (L), wobei die zweite Vorrichtung (13, 103) in Bezug auf die Trägerstruktur (3) zwischen einer jeweiligen Ruheposition, in der die zweite Vorrichtung (13, 103) in einem vorbestimmten Abstand von den Betriebseinrichtungen (4, 5; 104) ist, und einer jeweiligen Betriebsposition, in der die zweite Vorrichtung (13, 103) angeordnet ist, um einen Austausch mindestens eines Werkzeugs (L) zwischen der zweiten Vorrichtung (13, 103) und den Betriebseinrichtungen (4, 5; 104) zu ermöglichen, bewegbar ist; wobei die erste Vorrichtung (6, 105) in der jeweiligen Ruhestellung und die zweite Vorrichtung (13, 103) in der jeweiligen Ruhestellung übereinander sind.

2. Werkzeugmaschine (1) nach Anspruch 1, **dadurch gekennzeichnet, dass** die erste Vorrichtung (6, 105) in der jeweiligen Betriebsposition und die zweite Vorrichtung (13, 103) in der jeweiligen Betriebsposition im Wesentlichen die gleiche Position in einer Ebene einnehmen, die durch die zweite Achse (Y) und die dritte Achse (Z) definiert ist.

3. Werkzeugmaschine (1) nach Anspruch 1 oder 2, **dadurch gekennzeichnet, dass** die zweite Vorrichtung (13) durch eine erste Verschiebung gemäß einer geneigten Richtung mit einer Komponente entlang der zweiten Achse (Y) und einer Komponente entlang der dritten Achse (Z) aus der jeweiligen Ruheposition in die jeweilige Betriebsposition bewegbar ist.

4. Werkzeugmaschine (1) nach Anspruch 3, **dadurch gekennzeichnet, dass** die zweite Vorrichtung (13) ferner durch eine anschließende zweite Verschiebung entlang der zweiten Achse (Y) entlang der zweiten Achse (Y) bewegbar ist.

5. Werkzeugmaschine nach Anspruch 1 oder 2, **dadurch gekennzeichnet, dass** die zweite Vorrichtung (103) durch eine erste Verschiebung gemäß einer geneigten Richtung, die eine Komponente entlang der zweiten Achse (Y) und eine Komponente entlang der dritten Achse (Z) aufweist, und eine Drehung um die erste Achse (X) nach der ersten Verschiebung aus der jeweiligen Ruheposition in die jeweilige Betriebsposition bewegbar ist.

6. Werkzeugmaschine nach Anspruch 5, **dadurch gekennzeichnet, dass** die zweite Vorrichtung (103) weiterhin entlang der zweiten Achse (Y) durch eine anschließende zweite Verschiebung entlang der zweiten Achse (Y) bewegbar ist, und dass die Drehung um die erste Achse (X) durch ein Kippsystem erfolgt.

7. Werkzeugmaschine nach Anspruch 6, **dadurch gekennzeichnet, dass** das Kippsystem einen Nocken umfasst.

8. Werkzeugmaschine nach Anspruch 7, **dadurch gekennzeichnet, dass** die Drehung und die zweite Verschiebung gleichzeitig ausgeführt werden.

9. Werkzeugmaschine nach einem der Ansprüche von 5 bis 8, **dadurch gekennzeichnet, dass** während der ersten Verschiebung ein proximaler Abschnitt der zweiten Vorrichtung (103) in Bezug auf die Betriebseinrichtungen (104) auf einer Höhe ist, gemessen entlang der dritten Achse (Z), die niedriger ist als der übrige Abschnitt der zweiten Vorrichtung (103).

10. Werkzeugmaschine (1) nach einem der vorhergehenden Ansprüche, **dadurch gekennzeichnet, dass** die zweite Vorrichtung (13, 103) konfiguriert ist, um mindestens ein Werkzeug (L) zu tragen, umfassend ein Scheibenmesser.

11. Werkzeugmaschine (1) nach einem der vorhergehenden Ansprüche, **dadurch gekennzeichnet, dass** auf der Basis (2) eine Auflageebene (2' ) bereitgestellt ist und dass die erste Vorrichtung (6, 105) um die dritte Achse (Z) drehbar ist, die im Wesentlichen orthogonal zu der Auflageebene (2' ) ist.

12. Werkzeugmaschine (1) nach einem der vorhergehenden Ansprüche, **dadurch gekennzeichnet, dass** die erste Vorrichtung (6, 105) und die zweite Vorrichtung (13, 103) an der Trägerstruktur (3) entlang der Achse (Y) beweglich montiert sind.

## Revendications

1. Une machine-outil (1) pour l'usinage de pièces, comprenant :
- une base (2) pour soutenir, en service, au moins une pièce à usiner;
- une structure de support (3) mobile au-dessus de ladite base (2) le long d'un premier axe (X) et s'étendant sensiblement le long d'un second axe (Y);
- des moyens de fonctionnement (4, 5; 104) qui sont associés à ladite structure de support (3) et mobiles par rapport à ladite structure de support (3) le long dudit deuxième axe (Y) et le long d'un troisième axe (Z), qui est orthogonal audit premier axe (X) et audit deuxième axe (Y), lesdits moyens opérationnels (4, 5; 104) étant configuré pour recevoir, lors de l'utilisation, au moins un outil (U, L) pour usiner ladite au moins une pièce à usiner;
- un premier dispositif (6, 105) destiné à porter au moins un outil (U), ledit premier dispositif (6, 105) étant relativement mobile par rapport audit moyen de fonctionnement (4, 5; 104) entre une position de repos respective, dans laquelle ledit premier dispositif (6, 105) est à une distance prédéterminée dudit moyen opérationnel (4, 5; 104), et une position opérationnelle respective, dans laquelle ledit premier dispositif (6, 105) est placé de manière à permettre l'échange d'au moins un outil (U) entre ledit premier dispositif (6, 105) et lesdits moyens opérationnels (4, 5; 104); **caractérisé en ce que** ledit premier dispositif (6, 105) est mobile de la position de repos respective à la position opérationnelle respective par une translation le long dudit second axe (Y); et
- un deuxième dispositif (13, 103) pour porter au moins un outil (L), ledit deuxième dispositif (13, 103) étant mobile par rapport à ladite structure de support (3) entre une position de repos respective, dans laquelle ledit deuxième dispositif (13, 103) est à une distance prédéterminée dudit moyen de fonctionnement (4, 5; 104), et une position opérationnelle respective, dans laquelle ledit second dispositif (13, 103) est placé de manière à permettre l'échange d'au moins un outil (L) entre ledit second dispositif (13, 103) et lesdits moyens opérationnels (4, 5; 104); le premier dispositif (6, 105) dans la position de repos respective et le second dispositif (13, 103) dans la position de repos respective sont superposés.

2. Une machine-outil (1) selon la revendication 1, **caractérisée en ce que** ledit premier dispositif (6, 105) dans la position opérationnelle respective et ledit second dispositif (13, 103) dans la position de fonctionnement respective occupent sensiblement la même position sur un plan défini par le deuxième axe (Y) et le troisième axe (Z).

3. Une machine-outil (1) selon la revendication 1 ou 2, **caractérisée en ce que** ledit deuxième dispositif (13) est mobile de la position de repos respective à la position opérationnelle respective par une première translation selon une direction inclinée ayant une composante le long dudit deuxième axe (Y) et une composante le long dudit troisième axe (Z).

4. Une machine-outil (1) selon la revendication 3, **caractérisée en ce que** ledit second dispositif (13) est en outre mobile le long dudit second axe (Y) par une seconde translation subséquente le long dudit second axe (Y) .

5. Une machine-outil selon la revendication 1 ou 2, **caractérisé en ce que** ledit deuxième dispositif (103) est mobile de la position de repos respective à la position de fonctionnement respective par une première translation selon une direction inclinée ayant une composante le long dudit deuxième axe (Y) et une composante le long dudit troisième axe (Z), et une rotation autour dudit premier axe (X) après ladite première translation.

6. Une machine-outil selon la revendication 5, **caractérisée en ce que** ledit second dispositif (103) est en outre mobile le long dudit second axe (Y) par une seconde translation subséquente le long dudit second axe (Y), et **en ce que** ladite rotation autour dudit premier axe (X) est effectué par un système d'inclinaison.

7. Une machine-outil selon la revendication 6, **caractérisée en ce que** ledit système de basculement comprend une came.

8. Une machine-outil selon la revendication 7, **caractérisée en ce que** ladite rotation et ladite seconde translation sont effectuées simultanément.

9. Une machine-outil selon l'une quelconque des revendications précédentes 5 à 8, **caractérisés en ce que**, pendant ladite première translation, une partie proximale dudit deuxième dispositif (103) par rapport audit moyen opérationnel (104) est à une hauteur, mesurée le long dudit troisième axe (Z), qui est inférieure à la partie restante dudit deuxième dispositif (103).

10. Une machine-outil (1) selon l'une quelconque des revendications précédentes, **caractérisée en ce que** ledit second dispositif (13, 103) est configuré pour soutenir au moins un outil (L) comprenant une lame de disque.

11. Une machine-outil (1) selon l'une quelconque des revendications précédentes, **caractérisée en ce qu'**un plan de pose (2' ) est prévu sur ladite base (2) et **en ce que** ledit premier dispositif (6, 105) peut tourner autour dudit troisième axe (Z) qui est sensiblement orthogonal audit plan de pose (2' ).

12. Une machine-outil (1) selon l'une quelconque des revendications précédentes, **caractérisée en ce que** ledit premier dispositif (6, 105) et ledit second dispositif (13, 103) sont montés sur ladite structure de support (3) d'une manière mobile le long dudit axe (Y).
